# EUROPÄISCHE PATENTSCHRIFT

(11) **EP 1 172 258 B1**
(45) Veröffentlichungstag und Bekanntmachung des Hinweises auf die Patenterteilung: **29.09.2004**
(21) Anmeldenummer: 01116569.3
(22) Anmeldetag: 09.07.2001
(51) Int. Cl.: B60R 11/02

(54) **Freisprechanordnung**
Handfree-set
Dispositif main-libre

(30) Priorität: 13.07.2000 DE 10033985
(43) Veröffentlichungstag der Anmeldung: 16.01.2002
(73) Patentinhaber: paragon AG, 33129 Delbrück (DE)
(72) Erfinder: Rodemer, Klaus, 36369 Lautertal 5 (DE); Ohlenburger, Jörg, 35619 Braunfelds/Phillippstein (DE)
(74) Vertreter: Schütz, Peter, Dipl.-Ing.

(56) Entgegenhaltungen:
- DE-A- 3 808 055
- DE-A- 4 010 815
- PATENT ABSTRACTS OF JAPAN vol. 013, no. 090 (M-803), 2. März 1989 (1989-03-02) & JP 63 284049 A (MATSUSHITA ELECTRIC IND CO LTD), 21. November 1988 (1988-11-21)
- PATENT ABSTRACTS OF JAPAN vol. 011, no. 001 (M-550), 6. Januar 1987 (1987-01-06) & JP 61 181738 A (TOYO COMMUN EQUIP CO LTD), 14. August 1986 (1986-08-14)
- PATENT ABSTRACTS OF JAPAN vol. 2000, no. 20, 10. Juli 2001 (2001-07-10) & JP 2001 071862 A (FUSHIMI MAREZO;HOSHI MASANORI; TEZUKA MASASHIGE), 21. März 2001 (2001-03-21)

## Beschreibung

Die Erfindung betrifft eine Freisprechanordnung für ein Kraftfahrzeug.

Die Mikrofonanordnung bei einer Freisprechanlage für Kraftfahrzeuge ist problematisch hinsichtlich der optimalen Sprachverständigung, weil das Mikrofon einerseits die Stimme des Telefonierenden möglichst gut und andererseits die in einem Kraftfahrzeug unvermeidlichen Nebengeräusche möglichst wenig aufnehmen soll.

Aus der DE 197 51 920 A1 ist eine derartige Freisprech-Anlage mit einem im Fahrzeug angebrachten Mikrofonträger bekannt, der das Mikrofon in Betriebstellung in der Nähe des Kopfes des Telefonierenden hält. Hierzu ist eine zwischen die beiden Haltestangen der Kopfstütze einsetzbare Brücke vorgesehen, an der ein Schwanenhals mit einem Mikrofon sitzt, welches sich nahe an den Mund des Fahrers einstellen läßt, so daß es unmittelbar vom Schall der Sprache getroffen wird. Wenn der Fahrer nicht telefoniert, dann kann er den Schwanenhals seitlich nach hinten biegen, so daß er nicht von ihm irretiert wird.

Mikrofonhalterungen mit Bügeln bzw. Schwanenhalsmikrofone wirken häufig irretierend und ihre jedesmal erforderliche optimale Positionierung ist lästig. Es ist in der gattungsbildenden DE 40 10 815 A vorgeschlagen, ein Freisprechmikrofon am Sicherheitsgurt anzubringen, so daß es beim Anlegen des Sicherheitsgurtes automatisch in eine Position gelangt, in welcher eine gute Sprachverständigung möglich ist.

Der Erfindung liegt die Aufgabe zugrunde, eine Freisprechanordnung in einem Kraftfahrzeug zu schaffen, bei welcher das Mikrofon nicht eigens durch besondere Handgriffe in eine Betriebsstellung gebracht werden muß und den Fahrer möglicherweise irritiert, sondern in besonders zweckmäßiger Weise am Gurt angebracht ist und bei Inbetriebnahme des Fahrzeugs automatisch in eine Position gebracht wird, in der es problemlos benutzt werden kann, ohne irgendwie im Weg zu sein oder sonstwie zu stören.

Diese Aufgabe wird durch die im Anspruch 1 angegebenen Merkmale gelöst. Weiterbildungen der Erfindung sind in den Unteransprüchen gekennzeichnet.

Durch die erfindungsgemäße Montage des Mikrofons am Sicherheitsgurt gelangt das Mikrofon beim Anlegen des Sicherheitsgurts automatisch in eine Position, in welcher es sich in einer Betriebsstellung nahe beim Mund des Fahrers befindet, ohne dazu eine irritierende Bügelkonstruktion oder dgl. zu benötigen. Beim Ablegen des Gurtes hängt das Mikrofon im Bereich des Türpfostens (B-Säule), wo es ebenfalls nicht störend im Wege ist und außerdem geschützt ist.

Bei der Erfindung ergibt sich durch die Ausnutzung von in den Gurt eingewebten Metallfäden bzw. -litzen die Möglichkeit einer zweckmäßigen Ausgestaltung des Mikrofonanschlusses an die elektronische Schaltung durch die Anordnung von Kontakten an der Mikrofonunterseite zur Herstellung einer leitenden Verbindung mit den Gurtleitern. Eine Ausgestaltung einer solchen Verbindung besteht beispielsweise darin, beiderseits des Gurtes Befestigungsplatten, z.B. aus Plastikmaterial, vorzusehen und durch eine im Gurt vorgesehene Öffnung drehfest gegenüber dem Gurt miteinander zu verbinden. Auf einer der Befestigungsplatten sind Kontaktplatten angebracht, die durch Öffnungen in dieser Befestigungsplatte mit den Gurtleitern in elektrische Verbindung gebracht werden, beispielsweise durch Ankrimpen der Gurtleiterenden an Krimpösen der Kontaktplatten, ehe diese am Gurt befestigt werden. Die Verbindung zwischen den Befestigungsplatten erfolgt nach Art der bekannten Gurtstopper, beispielsweise über Hohlnieten, die sich beim Zusammendrücken der beiden Befestigungsplatten im Sinne einer sicheren Verbindung verformen, oder eine sonstige Quetschverbindung oder Kunststoffverschweißung.

Eine zweckmäßige Ausgestaltung der Erfindung besteht ferner darin, die Mikrofonkapsel in einem becherförmigen Gehäuse unterzubringen, das im Becherboden eine Sprechöffnung hat, durch welche die Schallwellen zur Membran des Mikrofons gelangen können, und das am Becherrand über eine Rastverbindung mit der die Kontaktplatten tragenden Befestigungsplatte verbunden werden kann. Diese Rastverbindung kann beispielsweise eine Wulst/Nut-Verbindung zwischen Becherrand und Befestigungsplattenrand sein. Zweckmäßigerweise bildet man die Mikrofonkontakte als Federkontakte aus, die beim Aufsetzen des Bechergehäuses auf die Befestigungsplatte gegen deren Kontaktplatten gedrückt werden und eine sichere Kontaktgabe gewährleisten.

Um auch bei unterschiedlich großen Fahrern eine optimale Mikrofonposition zu erreichen, können in weiterer Ausgestaltung der Erfindung längs des Sicherheitsgurtes mehrere Mikrofone vorgesehen werden, und mit Hilfe einer Auswählelektronik läßt sich aus den Signalen dieser Mkrofone nach vorgegebenen Kriterien jeweils dasjenige Mikrofon ermitteln, welches die für die Übertragung am besten geeigneten Sprachsignale liefert, und dieses Mikrofon wird dann für das Gespräch ausgewählt.

Zweckmäßigerweise sorgt man für eine geeignete Richtcharakteristik des Mikrofon, gegebenenfalls in Verbindung mit einer entsprechenden Schallführung durch eine passende Formgebung des Mikrofongehäuses oder der Hülse, in welcher das Mikrofon sitzt, so daß das Empfindlichkeitsmaximum in der Betriebsstellung zum Mund des Telefonierenden ausgerichtet ist. Es hat sich herausgestellt, daß man durch die Anordnung gemäß der Erfindung gegenüber herkömmlichen Einbaustellen des Mikrofons eine Verringerung der Störgeräusche bis zu 18 dB erreichen kann.

Die erfindungsgemäße Mikrofonhalterung kann als Erstausstattung für ein Kraftfahrzeug ausgebildet und vorgesehen werden, oder auch als Nachrüstsatz für eine nachträglich einzubauende Freisprechanlage. Sie kann auch an mehreren Sitzen vorgesehen werden, so daß nicht nur der Fahrer, sondern auch weitere Passagiere ein Mikrofon in günstiger Position zur Verfügung haben, wobei die einzelnen Mikrofonsignale in einer geeigneten Elektronik gemischt und aufbereitet werden können (z.B. unter Einbeziehung eines Störgeräusch-Unterdrückungssystems oder weiterer Signalverarbeitungsschaltungen).

Die erfindungsgemäße Mikrofonhalterung eignet sich jedoch nicht nur für Kraftfahrzeuge, sondern auch für andere Anwendungsgebiete, wo etwa ein Maschinenführer von einem Sitz aus eine Baumaschine, einen Kran, eine Fertigungsanlage oder was auch immer bedient und über eine Freisprechanlage mit einer anderen Stelle kommunizieren will.

Die Erfindung sei nun anhand eines in den beiliegenden Zeichnungen veranschaulichten Ausführungsbeispiels näher erläutert. Es zeigen:
- Fig. 1: eine schematische Darstellung eines Autositzes mit angegurtetem Fahrer, wobei die erfindungsgemäße Mikrofonhalterung das Mikrofon in eine Betriebsstellung in Hals/Kopf-Nähe bringt;
- Fig. 2: eine vergrößerte Detailansicht eines Ausführungsbeispiels der erfindungsgemäßen Mikrofonhalterung;
- Fig. 3: einen Gurtausschnitt, längs dessen drei Mikrofone angeordnet sind; und
- Fig. 4: einen vergrößerten Querschnitt durch den Gurt und ein Mikrofon längs der Schnittlinie A-A in Fig. 3.

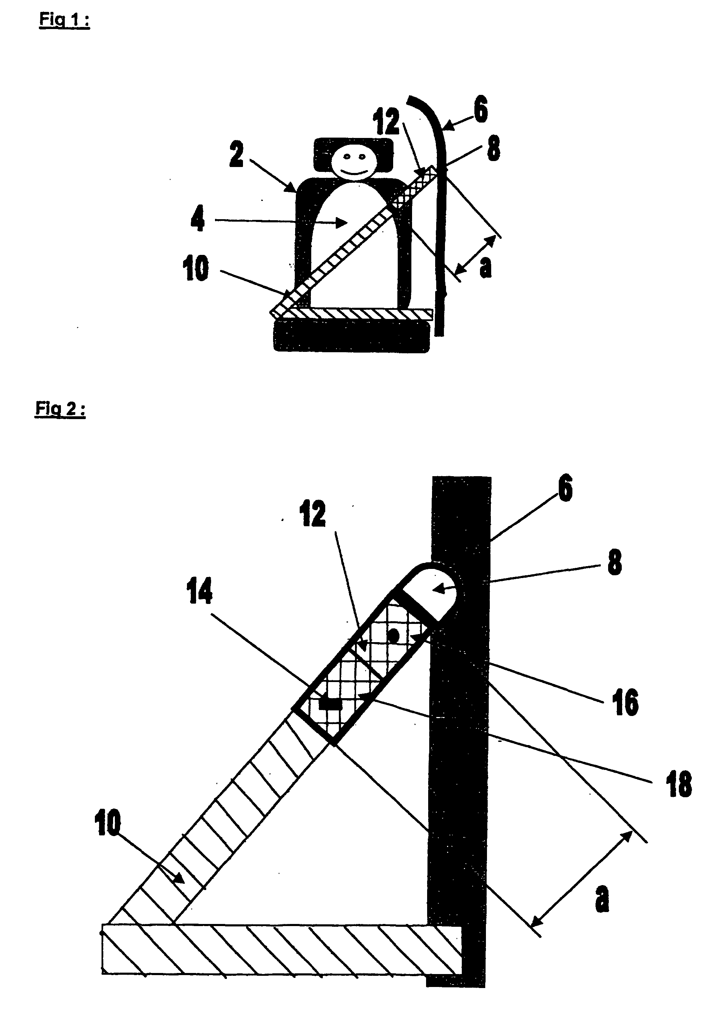

Fig. 1 veranschaulicht einen Autositz 2, auf dem ein schematisch angedeuteter Fahrer 4 Platz genommen hat. An der B-Säule 6 hinter dem vorderen Türausschnitt sitzt etwa in Schulterhöhe eine Gurtumlenkung 8 für einen Sicherheitsgurt 10, der in Anschnallposition gezeichnet ist.

Am oberen Ende des Gurtes 10 bei der Gurtumlenkung 8 sitzt eine Manschette 12 auf dem Gurt, die mit ihrem oberen Ende an der Gurtumlenkung 8 befestigt ist und in ihrem unteren Bereich ein Mikrofon 14 enthält.

Einzelheiten der Konstruktion zeigt Figur 2. Die Manschette 12 besteht im dargestellten Ausführungsbeispiel aus zwei Hülsen 16 und 18, von denen die obere Hülse 16 an dem Umlenkwinkel oder Beschlag der Gurtumlenkung 18 in geeigneter Weise befestigt ist, so daß der unten von der Gurtrolle kommende Sicherheitsgurt nach der Umlenkung durch die Manschettenhülsen frei hindurchläuft, also ohne Behinderung aufgerollt oder ausgezogen werden kann, wobei die Manschette an dem Umlenkwinkel festgehalten wird. Die untere Hülse 18 läßt sich gegenüber der oberen Hülse 16 verschieben und auf eine Distanz a einstellen, bei welcher das Mikrofon 14 die günstigste Position zum Mund des Fahrers einnimmt. Durch eine hier nicht dargestellte Rasteinrichtung zwischen den Hülsen 16 und 18 kann die so eingestellte Hülsenlänge fixiert werden. Die beiden Hülsen 16 und 18 könnten auch über einen einstellbaren Balg miteinander verbunden sein, der eine Einstellung der Manschettenlänge A erlaubt und nicht von selbst verändert.

Bei angelegtem Gurt nimmt das Mikrofon 14 seine Betriebsstellung ein, in welcher im Falle einer Richtcharakteristik das Empfindlichkeitsmaximum auf den Mund des Fahrers 4 ausgerichtet ist, der dadurch in keiner Weise beeinträchtigt ist, da er die Manschette mit dem Mikrofon gar nicht wahrnimmt. Legt er den Gurt ab und rollt sich dieser auf, dann läuft er durch die Manschette 12 frei hindurch und legt sich samt der Manschette 12 an die B-Säule 6 an. Das Mikrofon ist dann sicher und geschützt untergebracht und ist nicht im Wege.

Es leuchtet ein, daß die erfindungsgemäße Anbringung des Freisprechmikrofons an jedem der Sicherheitsgurte eines Autos möglich ist, so daß nicht nur der Fahrer sein Mikrofon benutzen kann. Die Anbringung, an welchem Gurt auch immer, erfordert keine aufwendigen Montagevorkehrungen, sondern kann relativ einfach durchgeführt werden, z.B. wenn man die Hülsen etwa auf der Rückseite mit einem Längsschlitz zum Einführen des Gurtes versieht. Auch läßt sich das Mikrofonkabel unproblematisch und geschützt entlang der B-Säule verlegen, ohne im Betrieb nennenswerten Belastungen ausgesetzt zu sein.

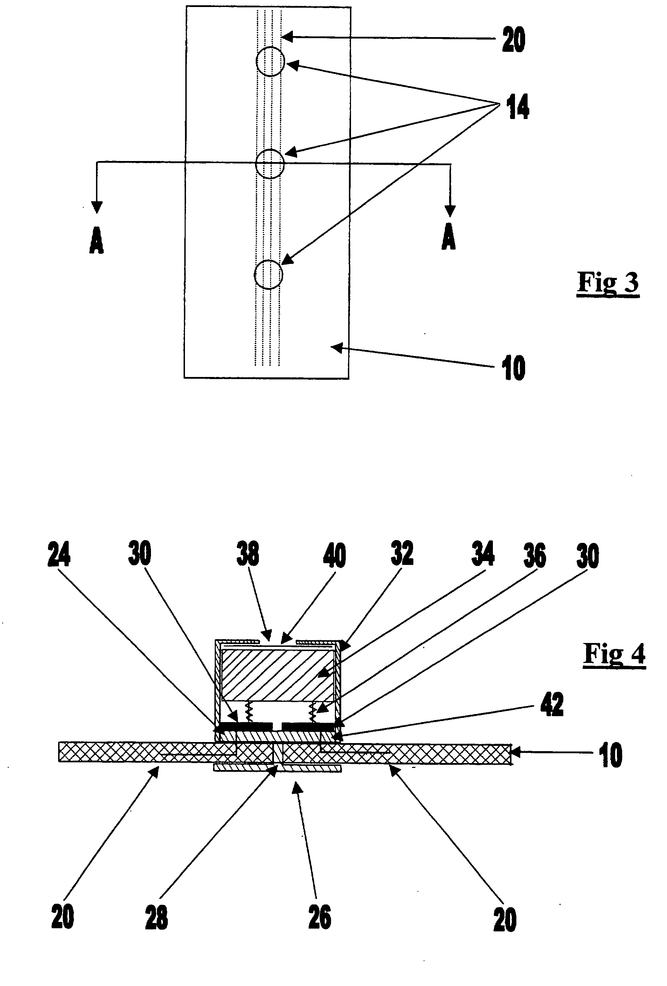

In Figur 3 sieht man einen Abschnitt des Gurtes 10, in welchen im dargestellten Beispiel vier metallische Leiter 20 eingewebt sind, die längs des Gurtes verlaufen. Im gegenseitigen Abstand sind im darstellten Beispiel drei Mikrofone 14 angeordnet, die in der aus Fig. 4 ersichtlichen Weise am Gurt befestigt sind. Position und gegenseitiger Abstand der Mikrofone 14 sind so gewählt, daß bei angelegtem Sicherheitsgurt sich immer eines der Mikrofone in optimaler Position zum Mund des Fahrers befindet und die am besten geeigneten Sprachsignale liefert.

Der in Fig. 4 gezeigte Schnitt A-A durch den Gurt läßt eine obere und eine untere Befestigungsplatte 24 bzw. 26 erkennen, die mit einer durch eine Öffnung im Gurt 10 verlaufende Quetschverbindung 28 verdrehfest miteinander und mit dem Gurt 10 verbunden sind. Enden der Leiter 20 sind durch die obere Befestigungsplatte 24 hindurchgeführt und durch eine hier nicht im einzelnen veranschaulichte Krimpverbindung mit Kontaktplatten 30 elektrisch verbunden. Die Kontaktplatten 30 sind auf der Oberseite der Befestigungsplatte 24 angeordnet und auf dieser befestigt.

Ein becherförmiges Gehäuse 32 beherbergt eine Mikrofonkapsel 34, von der zwei Kontaktfedern 36 nach unten ragen und bei montiertem Bechergehäuse auf die Kontaktplatten 30 drücken. Im Boden des Bechergehäuses 32 befindet sich eine Öffnung 38, die durch einen Filz 40 abgedeckt ist und einen Durchlaß für Schallwellen zur Membran der Mikrofonkapsel 34 bildet.

Das Bechergehäuse 32 trägt an seinem offenen Rand einen Wulst 42, der in eine umlaufende Nut am Rand der oberen Befestigungsplatte 24 einrasten kann, wenn das Bechergehäuse 32 mit der Mikrofonkapsel 34 auf die Befestigungsplatte gedrückt wird. Um die richtige Kontaktlage zwischen den Kontaktfedern 36 und den Kontaktplatten 30 zu gewährleisten, kann eine hier nicht veranschaulichte Führungsnase zwischen dem Rand des Bechergehäuses und der Befestigungsplatte 24 vorgesehen werden.

Um bei angelegtem Sicherheitsgurt 10 das an optimaler Position zum Sprechenden befindliche Mikrofon 14 als aktives Mikrofon aus der Mehrzahl von Mikrofonen auszuwählen, ist eine hier nicht eigens veranschaulichte Auswählschaltung vorgesehen, an welche die einzelnen Mikrofone angeschlossen sind. Im Falle der hier gezeigten drei Mikrofone 14 erfolgt ihr Anschluß über vier Leiter 20, von denen einer allen drei Mikrofonen als Masseleiter gemeinsam ist, während je einer der restlichen drei Leiter für den zweiten Mikrofonanschluß vorgesehen ist. Die auf diesen Leitern erscheinenden Signale werden von der Auswählschaltung nach bestimmten Kriterien dahingehend untersucht, welches Mikrofon die am besten geeigneten Sprachsignale liefert, welches also die beste Position zum Mund des Sprechenden hat, und dieses Mikrofon wird von der Auswählschaltung als aktives Freisprechmikrofon ausgewählt. Bei einem Fahrer anderer Körpergröße kann ein anderes Mikrofon die besten Sprachsignale liefern und wird dann von der Auswählschaltung für die Übertragung ausgewählt.

Eine andere Möglichkeit der Mikrofonauswahl beruht auf der Erkenntnis, daß große Fahrer den Sicherheitsgurt weiter anziehen als kleine und sich mit der Gurtauszugslänge die Lage der verschiedenen Mikrofone zum Mund des Fahrers ändert. Über fahrzeugabhängige Testreihen läßt sich daher ein Zusammenhang zwischen der Gurtauszugslänge und dem optimal gelegenen Mikrofon bestimmen. Da sich die Gurtauszugslänge durch Abtastung des Gurtrollendurchmessers ermitteln läßt, kann die Mikrofonauswahl für Fahrer unterschiedlicher Statur mit Hilfe eines Mikrofonumschalters erfolgen, der von einem Abtasthebel für den Gurtdurchmesser betätigt wird. Auch eine rein elektronische Umschaltung durch Umdrehungswinkelmessung der Gurtrolle ist denkbar.

Die Erfindung hat außerdem den erheblichen Vorteil, ohne jegliche zusätzliche Handgriffe allein beim Anlegen bzw. Abschnallen des Gurtes das Mikrofon automatisch in Betriebsstellung bzw. Ruhestellung zu bringen, ohne daß man irgendwelche sperrigen Teile in Kauf zu nehmen hätte.

## Patentansprüche

1. Freisprechanordnung für ein Kraftfahrzeug, mit im Sicherheitsgurt eingewebten leitenden Fäden die als von am Gurt (10) angebrachten elektrischen Kontakten (36) zu einer elektronischen Schaltung führende Verbindungsleiter (20) in Form von Metallfäden oder -litzen ausgebildet sind, und mit einem Mikrofon (14), **dadurch gekennzeichnet, daß** das Mikrofon (14) auf seiner dem Gurt (10) zugewandten Seite mit Kontakten (36) zur Berührung mit am Gurt (10) befindlichen und mit den im Gurt eingearbeiteten leitenden Fäden (20) verbundenen Gegenkontakten (30) versehen ist, und mit beiderseits des Gurtes (10) angeordneten Befestigungsplatten (24,26)die durch eine Öffnung im Gurt verdrehfest gegenüber diesem miteinander verbunden sind, wobei die Gegenkontakte (30) auf der mikrofonseitigen Befestigungsplatte (24) angebracht und durch sie hindurch mit den (20) verbunden sind.

2. Freisprechanordnung nach Anspruch 1, **dadurch gekennzeichnet, daß** die Verbindung zwischen den Befestigungsplatten (24,26) eine Quetschverbindung (28) ist.

3. Freisprechanordnung nach Anspruch 1, **dadurch gekennzeichnet, daß** die Gegenkontakte durch Kontaktplatten (30) gebildet werden, an welche die aus dem Gurt (10) heraus durch die Befestigungsplatte (24) hindurchgeführten leitenden Fäden (20) mit Krimpösen angeschlossen sind.

4. Freisprechanordnung nach Anspruch 1, **gekennzeichnet durch** ein eine Mikrofonkapsel (34) aufnehmendes becherförmiges Gehäuse (32), das im Becherboden mit einer Sprechöffnung (38) ausgebildet ist und am Becherrand über eine Nut/Wulst-Verbindung (42) mit der die Gegenkontakte (30) tragenden Befestigungsplatte (24) verriegelbar ist.

5. Freisprechanordnung nach einem der Ansprüche 1 bis 4, **dadurch gekennzeichnet, daß** die Mikrofonkontakte als Kontaktfedern (36) ausgebildet sind.

6. Freisprechanordnung nach einem der Ansprüche 1 bis 5, **dadurch gekennzeichnet, daß** längs des Gurtes (10) mehrere Mikrofone (14) angeordnet und mit einer Auswählschaltung verbunden sind, die dasjenige Mikrofon für die Übertragung auswählt, welches die für den Sprechverkehr nach vorgegebenen Kriterien am besten geeigneten Signale liefert.

7. Freisprechanordnung nach Anspruch 6, **dadurch gekennzeichnet, daß** die Auswählschaltung einen Mikrofonschalter, dessen Stellung durch die Gurtauszugslänge bestimmt wird, aufweist.

8. Freisprechanordnung nach Anspruch 7, **dadurch gekennzeichnet, daß** die Bestimmung der Gurtauszugslänge durch Messung des Gurtrollendurchmessers bzw. -drehwinkels erfolgt.

## Claims

1. A handfree-set for an automotive vehicle, comprising conducting filaments which are woven into a safety belt and are designed as connecting conductors (20) in the form of metal filaments or strands which lead from electrical contacts (36) mounted on said belt (10) to an electronic circuit, and comprising a microphone (14), **characterized in that** said microphone (14) is provided at its side facing said belt (10) with contacts (36) for contacting counter-contacts (30) which are provided on said belt (10) and connected to said conducting filaments (20) integrated into said belt, and with fastening plates (24, 26) which are arranged at both sides of said belt (10) and connected to one another through an opening in said belt in a non-rotational manner with respect to said belt, said counter-contacts (30) being mounted on said fastening plate (24) at the microphone side and connected through said plate to said conducting filaments (20).

2. The handfree-set according to claim 1, **characterized in that** the connection between said fastening plates (24, 26) is a crimp connection (28).

3. The handfree-set according to claim 1, **characterized in that** said counter-contacts are formed by contact plates (30) which have connected thereto by way of crimp lugs said conducting filaments (20) which are guided out of said belt (10) through said fastening plate (24).

4. The handfree-set according to claim 1, **characterized by** a cup-shaped housing (32) which accommodates a microphone capsule (34) and which is formed in the cup bottom with a speech opening (38) and which can be locked on the cup edge via a groove/bead connection (42) to said fastening plate (24) carrying said counter-contacts (30).

5. The handfree set according to any one of claims 1 to 4, **characterized in that** said microphone contacts are designed as contact springs (36).

6. The handfree-set according to any one of claims 1 to 5, **characterized in that** a plurality of microphones (14) are arranged along said belt (10) and connected to a selection circuit which selects that microphone for transmission that supplies the signals best suited for speech communication according to predetermined criteria.

7. The handfree-set according to claim 6, **characterized in that** said selection circuit comprises a microphone change-over switch the position of which is defined by the belt extension length.

8. The handfree-set according to claim 7, **characterized in that** said belt extension length is determined by measuring the belt roll diameter or rotation angle.

## Revendications

1. Dispositif mains libres pour un véhicule automobile, comportant des fils conducteurs tissés dans la ceinture de sécurité, qui sont réalisés en tant que conducteurs de connexion (20), sous la forme de fils ou de cordons métalliques, menant de contacts électriques (36) placés sur la ceinture à un circuit électronique, et comportant un micro (14), **caractérisé en ce que** le micro (14) est pourvu, sur son côté tourné vers la ceinture (10), de contacts (36) destinés à venir en contact avec des contre-contacts (30) se trouvant sur la ceinture (10) et reliés à des fils conducteurs (20), et comportant des plaques de fixation (24, 26), disposées sur les deux faces de la ceinture (10), qui sont reliées entre elles à travers une ouverture de la ceinture, de manière à ne pouvoir tourner l'une par rapport à l'autre, les contre-contacts (30) étant placés sur la plaque de fixation (24) côté micro et étant reliés, à travers celle-ci, aux fils conducteurs (20).

2. Dispositif mains libres selon la revendication 1, **caractérisé en ce que** la connexion entre les plaques de fixation (24, 26) est une connexion sertie (28).

3. Dispositif mains libres selon la revendication 1, **caractérisé en ce que** les contre-contacts sont formés par des plaques de contact (30) auxquelles sont raccordés, par des oeillets de sertissage, les fils conducteurs (20) ressortant de la ceinture (10) à travers la plaque de fixation (24).

4. Dispositif mains libres selon la revendication 1, **caractérisé par** un boîtier (32) en forme de godet, recevant la capsule (34) du micro, lequel boîtier est réalisé dans le fond du godet avec une ouverture pour parler (38) et peut être verrouillé sur le bord du godet, par une liaison à rainure/languette (42) avec la plaque de fixation (24) portant les contre-contacts (30).

5. Dispositif mains libres selon l'une des revendications 1 à 4, **caractérisé en ce que** les contacts de micro sont réalisés comme ressorts de contact (36).

6. Dispositif mains libres selon l'une des revendications 1 à 5, **caractérisé en ce que** le long de la ceinture (10) sont disposés plusieurs micros (14) qui sont reliés à un circuit de sélection qui sélectionne pour la transmission le micro qui fournit les signaux le mieux appropriés à la téléphonie suivant des critères prédéfinis.

7. Dispositif mains libres selon la revendication 6, **caractérisé en ce que** le circuit de sélection comporte un interrupteur de micro dont la position est déterminée par la longueur d'extraction de la ceinture.

8. Dispositif mains libres selon la revendication 7, **caractérisé en ce que** la détermination de la longueur d'extraction de la ceinture s'effectue par mesure du diamètre du rouleau de la ceinture ou de son angle de rotation.
